(19) Europäisches Patentamt
European Patent Office
Office européen des brevets

(11) Publication number: **0 201 341 B1**

(12) **EUROPEAN PATENT SPECIFICATION**

(45) Date of publication of patent specification: **25.03.92**

(51) Int. Cl.5: **G02F 1/137**, C09K 19/20, C09K 19/42

(21) Application number: **86303514.3**

(22) Date of filing: **08.05.86**

(54) **Liquid crystal display element and process for producing same.**

(30) Priority: **08.05.85 JP 97100/85**

(43) Date of publication of application:
**12.11.86 Bulletin 86/46**

(45) Publication of the grant of the patent:
**25.03.92 Bulletin 92/13**

(84) Designated Contracting States:
**CH DE FR GB LI**

(56) References cited:
**EP-A- 0 136 725**
**DE-A- 3 502 160**
**FR-A- 2 563 018**

**MOLECULAR CRYSTALS AND LIOUID CRYSTALS, vol. 110, no. 1/4, 1984, pages 175-203, Gordon and Breach Science Publishers, Inc., New York, US; J.W. GOODBY et al.: "Ferroelectric liquid crystals - structure and design"**

(73) Proprietor: **Chisso Corporation**
**6-32, Nakanoshima 3-chome Kita-ku**
**Osaka-shi Osaka-fu(JP)**

(72) Inventor: **Ichihashi, Mitsuyoshi**
**10-3, Otsutomo-cho Kanazawa-ku**
**Yokohama-shi Kanagawa-Ken(JP)**
Inventor: **Terashima, Kanetsugu**
**19-21, Yanagi-cho Kanazawa-ku**
**Yokohama-shi Kanagawa-ken(JP)**
Inventor: **Furukawa, Kenji**
**16-7, Kurihama 1-chome**
**Yokosuka-shi Kanagawa-ken(JP)**

(74) Representative: **Ruffles, Graham Keith et al**
**MARKS & CLERK 57-60 Lincoln's Inn Fields**
**London WC2A 3LS(GB)**

**EP 0 201 341 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

1. Field of the Invention

This invention relates to a liquid crystal display element using a ferroelectric liquid crystal material and a process for producing the same. More particularly it relates to a process for producing a liquid crystal display element wherein a novel process for aligning a chiral smectic C phase (hereinafter abbreviated often to $S_c$* phase) is employed.

2. Description of the Prior Art

Display devices using liquid crystal compositions have been in various fields, and conventional liquid crystal display devices are mainly of TN display mode utilizing a nematic phase (hereinafter abbreviated often to N phase). Such display devices utilizing TN display mode are characterized in that it is possible to make the devices thin and lightweight and yet the power consumption is extremely small and since the devices utilize a non-emissive display element, the display is easily seen even at light places in the sunlight, etc. and hence even when the devices are used for a long time, eyes are not tired. Making use of such characteristics, the TN display mode has been utilized for watch, electric computer, various measurement devices, etc., and recently it has also been utilized for the terminal display of personal computer, etc. However, as the application fields have been broadened as described above, the drawbacks of liquid crystal display devices such as low response speed, narrow viewing angle, etc. have come to offer a large obstacle to broadening of the application fields. In order to overcome such drawbacks, various researches have been extensively carried out, but in order to more advance such researches, it is indispensable to develop a display mode in place of the TN display mode. As one of such attempts, N.A. Clark and S.T. Lagerwall announced a display element having applied a light switching phenomenon of the chiral smectic C liquid crystal phase exhibiting ferroelectric properties (see Appl. Phys. Lett., Vol. 36, page 899 (1980)). The characteristics of this mode are higher response speed, less dependency on viewing angle, exhibition of memory effect, etc.

However, in order to commercialize this display mode, it is necessary to solve a number of problems in various aspects. As a large problem among them, there is a problem of uniformity of alignment of ferroelectric liquid crystal molecules. In the case of the so-called multi-domain state where the alignment of liquid crystal molecules is not uniform, the display is uneven and as a result, the contrast ratio lowers or the display surface is colored to notably reduce the display quality. Thus, in order to prepare a display element having a superior grade, it is an indispensable requirement to make the alignment of liquid crystal molecules uniform.

At present, some methods of controlling the alignment of liquid crystal materials having $S_c$* phase have been studied. As a method of aligning $S_c$* phase in a liquid crystal cell having a small distance between electrodes, the following three methods have been attempted: (1) shearing method, (2) temperature gradient method and (3) surface-treatment method. The shearing method is the one employed when N.A. Clark and S.T. Lagerwall prepared a liquid crystal cell using a liquid crystal having $S_c$* phase for the first time, that is, a method of effecting alignment by applying a shearing stress in a smectic A phase (hereinafter abbreviated often to $S_A$ phase) which is adjacent to the $S_c$* phase (see the above literature). The temperature gradient method is a method found by noting that a smectic phase would be regarded as a one-dimensional crystal, i.e. a method similar to an epitaxial crystal growth method. The surface treatment method has been practically employed broadly for aligning nematic liquid crystal materials, that is,a method of forming a thin aligned film on the surface of a cell substrate by means of coating, rubbing, vacuum deposition, etc. to align liquid crystal molecules. From the viewpoint of commercial production of liquid crystal display elements, it is most preferred to align liquid crystal molecules by the surface treatment method, but since smectic liquid crystal materials generally have a high viscosity, it is impossible to easily obtain a monodomain by the treatment of the substrate surface as in the case of nematic liquid crystal materials. The present inventors previously invented practical ferroelectric liquid crystal compositions (for example, Japanese patent application laid-open No. Sho 60-90290 and Japanese patent application No. Sho 59-219152), but these compositions can not always realize a good alignment of $S_c$* phase, and in most cases, it is necessary to effect the alignment by gradual cooling in an electric field or by repeating gradual heating and gradual cooling over a considerably long time. The liquid crystal display elements obtained by the above-mentioned alignment-controlling method of applying an external force or extremely slowing the temperature-descending speed,

have a drawback that if the temperature once exceeds the upper limit temperature of the smectic phase at the time of their use, then even when the temperature is again returned to the temperature region of $S_c$* phase, they exhibit a multi-domain state and hence it is impossible to use them.

## SUMMARY OF THE INVENTION

As apparent from the foregoing, a first object of the present invention is to provide a liquid crystal display element exhibiting a monodomain state in a ferroelectric $S_c$* phase. Another object thereof is to provide a process for producing the liquid crystal display element with simple means for aligning the $S_c$* phase. Other objects will be apparent from the succeeding descriptions.

In order to solve the above problems, the present inventors have made extensive research in the aspect of ferroelectric liquid crystal materials, and as a result have found that the aimed liquid crystal composition is the one having a phase transition type which exhibits, with decreasing temperature, the sequence of an isotropic phase, a cholesteric phase (hereinafter abbreviated often to I phase, Ch phase, respectively), $S_A$ phase and $S_c$* phase, and in the composition, the longer the helical pitch of the Ch phase of the composition, the better the aligning properties.

The present invention has been completed based on this finding.

The present invention in a first aspect resides in

a liquid crystal display element using a ferroelectric liquid crystal material which has all of an isotropic phase, a cholesteric phase, a smectic A phase and a ferroelectric chiral smectic C phase in this order toward the temperature-descending direction starting from said isotropic phase, the respective helical pitches in said cholesteric phase and smectic C phase being 2 µm or more.

The present invention in a second aspect resides in

a process for producing a liquid crystal display element which comprises carrying out alignment of a chiral smectic C phase by the use of a ferroelectric liquid crystal material which has all of an isotropic phase, a cholesteric phase, a smectic A phase and a ferroelectric chiral smectic C phase in this order toward the temperature-descending direction starting from said isotropic phase, the respective helical pitches in said cholesteric phase and smectic C phase being 2 µm or more.

## BRIEF DESCRIPTION OF THE DRAWINGS

Fig. 1 shows a phase diagram of a binary composition consisting of compound 3 and compound 4.

Figs. 2A - 10A, Figs. 11 - 14 and Figs. 15A - 22A show photographs by means of polarizing microscope illustrating the aligning state of liquid crystal molecules, respectively. The magnifications of the photographs of these figures are 100 times.

Figs. 2B - 10B and Figs. 15B - 22B respectively show a chart illustrating the directions of a polarizer (P) and an analyzer (A) of a polarizing microscope and the rubbing direction of a display cell, in the respective photographs of the corresponding numbers to those of these figures.

## DETAILED DESCRIPTION OF PREFERRED EMBODIMENTS

There are a number of liquid crystal compounds having determined the helical twist senses in $S_c$* phase or latent $S_c$* phase and Ch phase or latent Ch phase and they are used as a component of the liquid crystal materials. A part of such compounds are shown in Table 1. (S) and (R) in the structural formulas of Table 1 indicate that the absolute configurations of the optically active substances are of S type (Sinister type) and of R type (Rectus type), respectively, and the sign of the spontaneous polarization (abbreviated to Ps) followed those defined by Lagerwall et al (see Mol Cryst. Liq. Cryst., Vol. 114, page 151, 1984).

Table 1

| No. of compound | Structural formula | Helical twist sense: Ch phase | Helical twist sense: $S_C$* phase | Sign of polarization |
|---|---|---|---|---|
| 1 | (S) 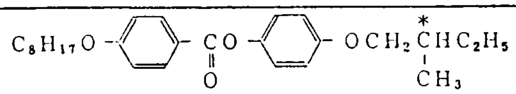 | left | left | - |
| 2 | (S) 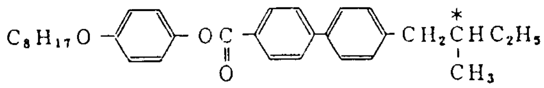 | right | right | + |
| 3 | (S) 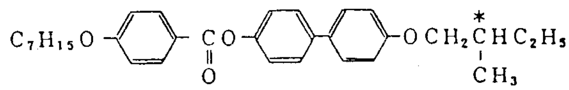 | left | left | - |
| 4 | (S) 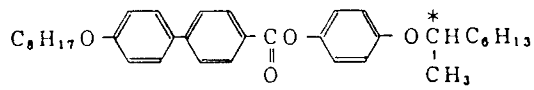 | right | left | - |
| 5 | (S) 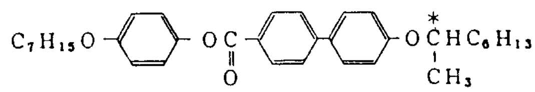 | right | left | - |
| 6 | (S) 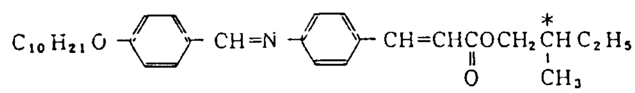 | right | right | - |
| 7 | (S) 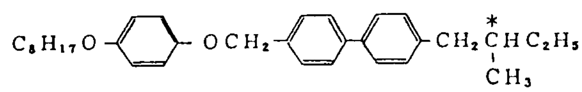 | right | right | + |
| 8 | (R) 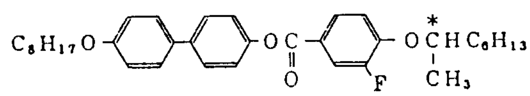 | left | right | + |
| 9 | (S) 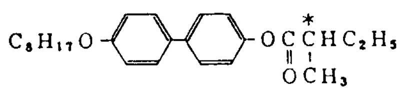 | left | left | - |
| 10 | (S) 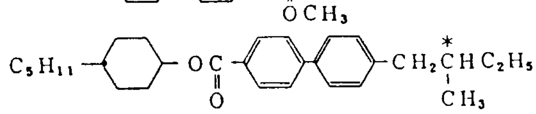 | right | right | + |
| 11 | (S) 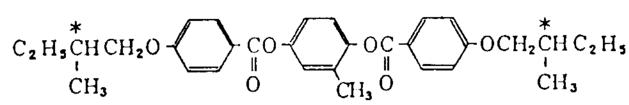 | left | left | - |
| 12 | (S) 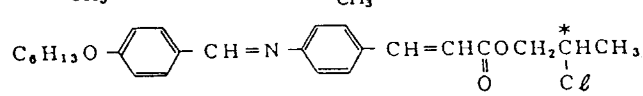 | left | left | + |
| 13 | (R) 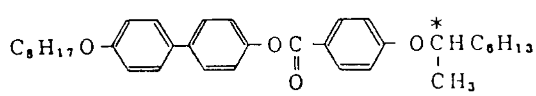 | left | right | + |
| 14 | 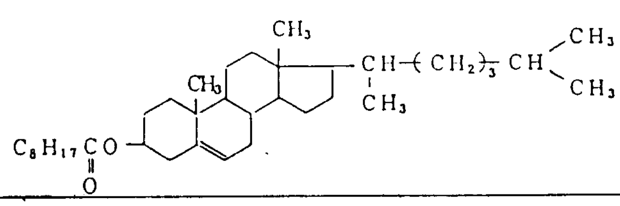 | left | left | - |

In order to cause the phase transition type of the liquid crystal composition relative to the temperature-descending direction to be the one wherein all of I phase, Ch phase, $S_A$ phase and $S_c$* phase are present in this order, it is favorable for the component compounds to be all those of such phase transition type. However, even when the component compounds contain those having a different phase transition type, it is possible to obtain a composition having a desired phase transition type by adjusting the proportion of the

other components. For example, in the case where a compound having no $S_A$ phase is used as a component to be blended, the content of another compound having a broad temperature range of $S_A$ phase may be increased, and in the case where a compound having no Ch phase is used, the content of a compound having a broad temperature range of Ch phase or nematic phase may be increased, whereby it is possible to easily prepare a composition having the objective phase transition type.

In order to cause the pitch of Ch phase of the thus prepared liquid crystal composition to fall within a preferred range (2 $\mu$m or more), the adjustment may be carried out taking into account the helical twist sense in Ch phase. Namely, in order to prolong the helical pitch in Ch phase, it has been known that this can be achieved by blending compounds having opposite helical twist senses to each other to thereby compensate the helical twists (see Japan J. Appl. Phys., Vol. 14, page 1307 (1975). All of the compounds to be blended in order to prolong pitch of Ch phase do not have Ch phase. Even a chiral compound which does not exhibit Ch phase can generate twisting power of Ch phase in a mixture. When such a compound latently has twist sense of Ch phase opposite to that of mixture, it can be used to prolong cholesteric pitch. Besides, it is also possible to prolong the pitch by blending an achiral liquid crystal compound such as a usual nematic liquid crystal.

In order to prolong the helical pitch of $S_c$* phase of the composition, it is possible to employ a means of blending a component having an opposite helical twist sense or blending a component which per se exhibits no $S_c$* phase but provides an opposite twist sense when mixed with other $S_c$*compound, as in the above case of prolonging the helical pitch of Ch phase (see Japanese patent application laid-open No. Sho 60-90290/1985, Japanese patent application No. Sho 60-36003/1985 and Japanese patent application No. Sho 60-48546/1985).

As described above, the means for preparing a ferroelectric liquid crystal composition capable of relatively easily aligning $S_c$* phase, when it is used in the present invention, is per se not novel. However, the fact that the ferroelectric liquid crystal material specified in the present invention has very excellent condition of alignment of $S_c$*phase is an entirely novel finding.

Next, the novel fact found by the present inventors with regard to the alignment of $S_c$* phase will be described.

The liquid crystal phase of practical ferroelectric liquid crystal materials belongs to $S_c$* phase. However, it is not practical to fill such ferroelectric liquid crystal materials in a state of $S_c$* phase in a display element because of a high viscosity in such a phase. Thus, practically it is preferred to fill them in a liquid state of I phase in a display element, followed by cooling to thereby cause them to effect transition into $S_c$* phase.

In general, the types of phase transition starting from I phase and led to $S_c$* phase include the following four: (1) I phase → $S_c$* phase, (2) I phase → Ch phase → $S_c$* phase, (3) I phase → $S_A$ phase → $S_c$* phase and (4) I phase → Ch phase → $S_A$ phase → $S_c$* phase. In the case of the phase transition type (1) or (2), $S_c$* phase wherein the direction normal to the smectic layer does not accord with the direction of the longer axis of liquid crystal molecule called director, appears directly from I phase or Ch phase; hence in order to obtain a monodomain, it is necessary to apply an external force such as electric field of magnetic field during the phase transition process to thereby forcibly effect alignment, and further, even when such an alignment control by means of an external force is carried out, monodomain is not always obtained.

On the other hand, in the case of $S_A$ phase, since the direction of the normal on the layer surface and that of the major axis of molecule called director are the same; hence it is possible to obtain a relatively good monodomain state even when no external force is applied. The state of the layer once formed in $S_A$ phase is retained even after its transition into $S_c$* phase; hence it can be said that the phase transition type (3) or (4) wherein $S_A$ phase is present on the higher temperature side of $S_c$* phase is superior in the aligning properties of $S_c$* phase to the phase transition type (1) or (2). Thus, in order to improve the alignment of $S_c$*phase, how to improve the alignment of $S_A$ phase has become important. The present inventors considered that alignment of $S_A$ phase via Ch phase having an intermediate order between I phase and $S_A$ phase might have a greater possibility of effecting a good alignment than direct alignment of $S_A$ phase from I phase. In fact, however, the phase transition type (4) is not always superior in the alignment of $S_A$ phase to the phase transition type (3). The reason is considered due to a transition mechanism that the helix of Ch phase must be untwisted at the time of transition from Ch phase into $S_A$ phase. So, the condition of the alignment is seemed to be concerned with the helical pitch of Ch phase. Thus, a number of compositions having a slight twist of Ch phase in the display element, i.e. compositions having a long helical pitch of Ch phase were prepared and the resulting alignment was tested. As a result, display elements having notably improved aligning properties of $S_c$* phase were obtained without exception. Among such compositions, those having good aligning properties exhibited a N phase state where the helix was completely untwisted in the display element in spite of the temperature falling within a temperature range exhibiting Ch phase, and all molecules had directors arranged in the rubbing direction of the substrates. When transition was

carried out from this state into $S_A$ phase, it was unnecessary to untwist the helix and rearrange the direction of molecules, but phase transition completed only by translation of molecules.

Thus, it was found that even when the phase transition was carried out without gradual cooling, the aligning properties of $S_A$ phase were good and the aligning properties of the resulting $S_c{}^*$ phase were also superior.

Next, the aligning properties of $S_c{}^*$ phase will be described by way of examples.

The phase transition temperatures of compound 3 in Table 1 are as follows:

$$C \underset{}{\overset{85.8°C}{\rightleftharpoons}} S_C{}^* \overset{121.8°C}{\rightleftharpoons} Ch \overset{175°C}{\rightleftharpoons} I$$

and those of compound 4 are as follows:

$$C \overset{66°C}{\rightleftharpoons} S_C{}^* \overset{108°C}{\rightleftharpoons} S_A \overset{149°C}{\rightleftharpoons} I$$

wherein C represents crystalline phase.

The phase diagram of a binary system consisting of compound 3 and compound 4 is shown in Fig. 1. When the proportion of compound 3 is 64.0% by mol, the phase transition type of the binary system is of I phase → Ch phase → $S_A$ phase → $S_c{}^*$ phase in the temperature-descending direction, that is, it belongs to the above type (4) (see the composition point ③ in Fig. 1). This composition was filled in an I phase state in a display element obtained by applying polyvinyl alcohol onto the surface of substrates having a distance of 10 μm and subjecting the resulting surfaces to a parallel aligning treatment by rubbing, and the condition of alignment only through temperature descending was observed by means of a polarizing microscope arranged in a crossed Nicol state. As result, at 145°C within a Ch phase temperature region, a complete texture of well aligned nematic phase was observed as shown in Fig. 2A. The composition was cooled from Ch phase at a temperature descending rate of 10°C/min. The conditions of alignment of $S_A$phase at 135°C and $S_c{}^*$ phase at 125°C are shown in Fig. 3A and Fig. 4A, respectively. In spite of rapid cooling, a very good monodomain was observed, and the direction normal to the smectic layer accorded with the rubbing direction (a direction shown by a vector r in Fig. 3B and Fig. 4B, respectively). In Fig. 4A, screw dislocation lines are observed, but since they can be extinct by impressing an electric field, it is recognized to be a complete monodomain.

The same binary system composition wherein the proportion of compound 3 is 30.1% by mol (composition point ① in Fig. 1) has a phase transition type of I phase → $S_A$ phase → $S_c{}^*$ phase in the temperature-descending direction and is deficient in Ch phase. When this composition was filled in a display element having the same distance between substrates (10 μm), and a careful alignment starting from I phase and at a temperature-descending rate of 1°C/min. was tried, but $S_c{}^*$ phase at 95°C exhibited a multidomain state as shown in Fig. 5A, that is, showed very bad aligning properties.

Further, a composition wherein the proportion of compound 3 was 54.4% by mol (a composition point ② in Fig. 1) had a phase transition type of I phase → Ch phase → $S_A$ phase → $S_c{}^*$ phase in the temperature-descending direction, and the helical pitch of Ch phase was 1 μm or less. This composition was filled in a display element having a distance between substrates (hereinafter referred to as cell gap) of 10 μm, and a careful alignment starting from I phase at a temperature-descending rate of 1°C/min. was tried. No nematic state appeared in the Ch phase temperature region and it was shown that the helix was still remained, and further, in the $S_A$ phase at 130°C, as shown in Fig. 6A, in the direction of the normal on the layer surface, a deviation of 25 ~ 30° from the rubbing direction shown in Fig. 6B was observed, and yet the angle of this deviation varied each time alignment was carried out, and hence no reproducibility was observed.

The same binary system composition wherein the proportion of compound 3 was 75.0% by mol (a composition point ④ in Fig. 1) had a phase transition type of I phase → Ch phase → $S_c{}^*$ phase in the temperature-descending direction, that is, deficient in $S_A$ phase. Even when this composition was carefully led into Ch phase in a liquid crystal element having a cell gap of 10 μm, its helix was still remained and no nematic state was formed. Further, even when alignment was carefully carried out from Ch phase at a temperature-descending rate of 1°C/min., the alignment state of $S_c{}^*$ phase at 125°C was far inferior as

seen in Fig. 7A.

A composition wherein compound 4 was replaced by the rectus enantiomer of compound 4 and its proportion was 36.0% by mol had a phase transition naturally equal to that of the composition ③ in Fig. 1, but since it consisted of components having the same helical twist sense of the Ch phase, the helical pitch of the Ch phase was small. This composition exhibited Ch phase at 145 °C in a liquid crystal cell having a cell gap of 10 μm, but since the helical pitch was short, no nematic state was formed as shown in Fig. 8A. The respective alignment states in the case where the composition showed $S_A$ phase at 135 °C and $S_c$* phase at 125 °C each at a temperature-descending rate of 10 °C/min. exhibited a multi-domain state, as shown in Fig. 9A and Fig. 10A and were far inferior. As shown by those examples, it is seen that even when either one of $S_A$ phase or Ch phase is deficient, or even when the helical pitch is short in Ch phase, no good monodomain is exhibited and-the alignment of $S_c$* phase is inferior.

Further, it has been found that a fact that the helical pitch of Ch phase and that of $S_c$* phase have an independent relationship with each other. This is evidence by the following certain examples. For example, when compound 3 and compound 6 in Table 1 are mixed in a cell having a cell gap of 71 μm according to contact method, a N phase state i.e. a state where the helical pitch of Ch phase is regarded infinitive is observed, in the contact region, as seen in Fig. 11, but when its temperature is lowered, the resulting $S_c$* phase in the region of N phase observed has a helical pitch of 8.6 μm (see Fig. 12). As another example, when compound 3 and compound 5 are contacted, a N phase state is exhibited in the contact region, as seen in Fig. 13, whereas when its temperature is lowered to $S_c$* phase region, no region where the resulting $S_c$* phase has infinitive helical pitch is observed (see Fig. 14). The latter example shows that the helical twist senses of the components are opposite to each other in Ch phase, but are the same in $S_c$* phase.

From such a number of observation results, the present inventors have found a fact that the twist sense of Ch and $S_c$* phases are independent to each other and the helical pitches of both phases have no relationship. This shows a possibility that the helical pitch of Ch phase and that of $S_c$* phase in a chiral smectic liquid crystal composition can be optionally changed.

By means of the above-mentioned aligning method, the alignment process of $S_c$* phase can be rapidly carried out as in the case of the alignment of nematic liquid crystal materials; hence it is possible to easily prepare a liquid crystal display element using a ferroelectric liquid crystal material and having a high response speed by applying the above aligning method.

As apparent from the above-mentioned aligning process of $S_c$* phase, the direction normal to the smectic layer accords necessarily with the rubbing direction of the substrate. This is very desirable in the following two points: One point is that when the rubbing direction is determined, the two possible directions of the director in a liquid crystal display element are inevitably determined; hence merely by knowing the rubbing direction, it is possible to easily fit the polarization direction of polarizers to be fixed to a cell. Another point is that it is possible to realize the bistability necessary for developing the memory effect. In short, when the direction normal to the smectic layer accords with the rubbing direction, the degree of the two angles between rubbing direction and two respective director directions are equal to one another. This means that the anchoring forces upon molecule by the rubbing, in the two director directions are equal, and as a result, the bistability is easily realized. If the direction normal to the smectic layer does not accord with the rubbing direction, the angles of the two director directions made against the rubbing direction are different from one another and hence there occurs a difference between the anchoring forces by the rubbing, so that the bistability cannot be realized.

Ferroelectric liquid crystal materials are provided with the characteristics that they have a large spontaneous polarization, a long helical pitch in $S_c$* phase and a broad $S_c$* phase temperature range, but with a number of liquid crystal compositions, it could not have so far been easily carried out to align $S_c$* phase, whereas the direction of improvement in such liquid crystal compositions has been afforded by the present invention, that is, a display element having a ferroelectric liquid crystal phase of monodomain and also having a high response speed is obtained by using a liquid crystal composition having improved aligning properties of $S_c$* phase. As to the liquid crystal display element provided by the present invention, even when its use has been temporally impossible due to an abnormal temperature rise, for example, temperature rise up to 100 °C or higher in automobiles in summer time, it can be again used if the temperature is returned to the $S_c$* phase temperature region as the ambient temperature lowers thereafter. This is a large difference between the liquid crystal display element of the present invention and liquid crystal dispaly elements having $S_c$* phase aligned according to the controlling method e.g. by means of an external force such as electric field, very slow cooling, etc. In the case of those having $S_c$* phase aligned by means of an external force, etc., if the temperature once exceeds upper limit temperature of the smectic phase, then even when the temperature lowers down to the $S_c$* phase region, a multidomain appears and hence such display elements are unpractical.

Further, according to the present invention, it is possible to prepare a display element using a ferroelectric liquid crystal material without adding any troublesome treatment to the production process where liquid crystal display elements have now been prepared using a nematic liquid crystal mixture; hence the present invention is useful as a commercial production process.

The present invention will be described in more detail by way of Examples and Comparative example, but it should not be construed to be limited thereto. The cell used in the following Examples was composed of substrates each having a transparent electrode of indium tin oxide (ITO) coated with polyvinyl alcohol as an aligning agent and subjected to parallel aligning treatment by rubbing the surfaces. The liquid crystal composition was filled in the I phase state and alignment was carried out only by a temperature descending operation. The aligning state was observed by a polarizing microscope arranged in crossed Nicols state, using a halogen lamp as light source, and photographed without using any color filter. The spontaneous polarization value was measured according to Sawyer-Tower method. The measurement of the helical pitch of Ch phase was carried out according to Cano wedge method, and the helical pitch of $S_c$* phase was sought by directly measuring the distance between the stripe patterns corresponding to the full pitch in a cell wherein the helical axis is parallel to the substrates, by means of a polarizing microscope.

Example 1

A ferroelectric liquid crystal composition (I) consisting of

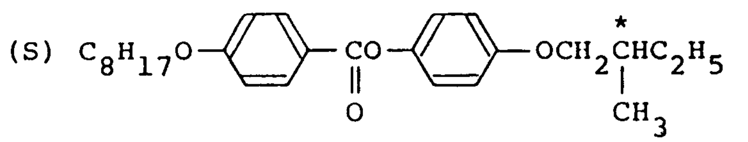

(compound 1)

(82.1% by mol) and

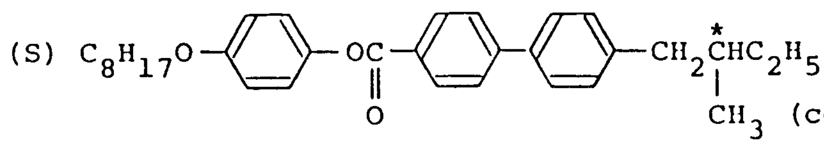

(compound 2)

(17.9% by mol)

was prepared. The phase transition points of the component compounds and the composition (I) are shown in Table 2.

Table 2

| | Phase transition point (℃) | | | | | |
|---|---|---|---|---|---|---|
| | C | $S_B$ | $S_c$* | $S_A$ | Ch | I |
| Compound 1 | • 43.1 | (• 22.0 | • 42.1) | • 57.9 | — | • |
| Compound 2 | • 76 | — | • 88.6 | — | • 155.4 | • |
| Composition (I) | • 32 | (• 18) | • 50 | • 62 | • 73 | • |

In Table 2, symbol • and symbol - mean the presence and absence of the phase thereabove, respectively and symbol (• ) means that the phase transition is monotropic.

The helical pitch of Ch phase of the composition (I) is 40 μm or more and Ch phase in a cell having a

cell gap of 10 $\mu$m exhibited N phase state. The composition was cooled from N phase at a temperature-descending rate of 10°C/min. in the cell to exhibit textures of $S_A$ and $S_c$* phases at 55°C and 35°C, respectively, which are shown in Figs. 15A and 16A. In spite of a thick cell having a cell gap of 10 $\mu$m and yet a rapid temperature-descending, it was observed that a good monodomain was formed and the direction of the normal on the layer surface accorded with the rubbing direction. Further, the helical pitch in $S_c$* phase was 8.3 $\mu$m and the spontaneous polarization value was 2.5 nC/cm$^2$.

The aligning state of $S_c$* phase obtained by filling the composition (I) in a cell of a cell gap of 2 $\mu$m and lowering the temperature from I phase down to 35°C at a rate of 10°C/min. is shown in Fig. 17A. Since this $S_c$* phase is under non-electric field, two regions different in the direction of director are shown by brightness and darkness in the photograph of Fig. 17A; this shows that liquid crystal molecules exhibit two stable states in the respective regions. By impressing an electric field to this liquid crystal cell so as to change its polarity, it became possible to from a bright or dark state in the total region of the liquid crystal cell.

To this liquid crystal cell was impressed an alternating voltage of a rectangular wave of peak to peak 20 V and the response time was measured at 35°C to give 1 m sec. Further, since a monodomain state was obtained, the contrast ratio of the liquid crystal cell was as high as 25 or more.

Compound 1 is deficient in Ch phase and compound 2 is deficient in $S_A$ phase, but in the case of the composition (I) containing these compounds as components, the respective deficient phases were compensated to give a phase transition type of I phase → Ch phase → $S_A$ phase → $S_c$* phase in the temperature-descending order. Since the helical twist senses of $S_c$* phase and Ch phase of the component compounds are in the opposite direction to one another, the helical pitch of the composition could be extended. As to the helical pitch of $S_c$* phase, since that of compound 2 is shorter, the pitch of the composition could be fully extended in the above-mentioned ratio. Since the signs of the spontaneous polarization of the component compounds are opposite to one another, the spontaneous polarization value of the composition is slightly reduced by compensation, but since the content of compound 2 having a less spontaneous polarization value was made lower, it was possible to retain the spontaneous polarization value of the composition on a level of practical use. In such a manner, a compound having a small spontaneous polarization value but having a short helical pitch can be mixed with a compound having an opposite twist sense to that of the former compound and also having a large spontaneous polarization value, to thereby extend the helical pitch.

Example 2

A ferroelectric liquid crystal composition (II) consisting of the following compounds:

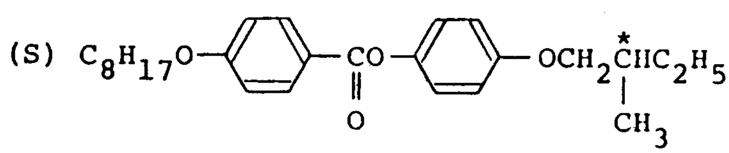

(Compound 1) 20 parts by weight

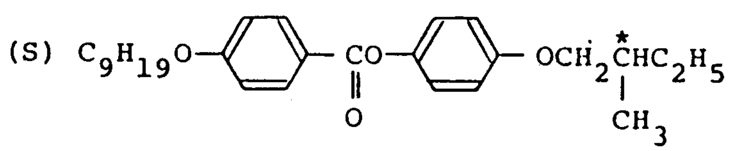

(Compound 15) 15 parts by weight

(S) 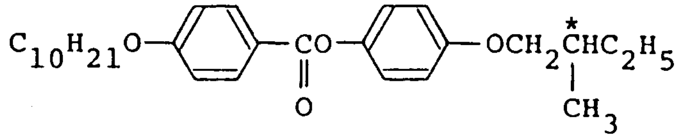

(Compound 16) 15 parts by weight

(S) 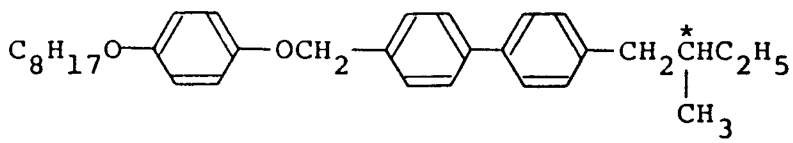

(Compound 7) 10 parts by weight

(S) 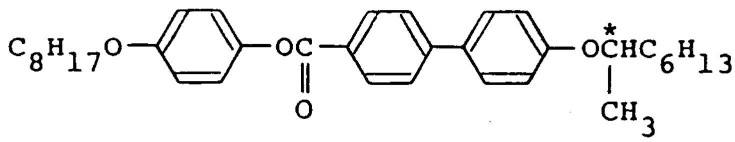

(Compound 17) 20 parts by weight

(S) 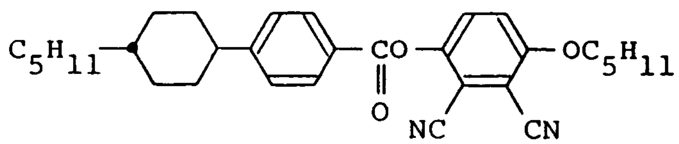

(Compound 18) 10 parts by weight

had phase transition points of

$$C \underset{}{\overset{0^\circ C \text{ or lower}}{\rightleftharpoons}} S_c^* \overset{68^\circ C}{\rightleftharpoons} S_A \overset{74^\circ C}{\rightleftharpoons} Ch \overset{83^\circ C}{\rightleftharpoons} I$$

and the helical pitch of Ch phase was 40 µm or more, the helical pitch of $S_c$*, 8.1 µm, the spontaneous polarization value, 18 nC/cm$^2$ and the tilt angle, 25°. This liquid crystal composition was filled in a cell having a cell gap of 10 µm and cooled down to 70°C. As a result, a N phase state as shown in Fig. 18A was observed. Further it was cooled down to 25°C at a temperature-descending rate of 10°C/min. The aligning state of the resulting $S_c$* phase is shown in Fig. 19A. In spite of a large cell gap and rapid cooling, a very good aligning state was obtained, and also the direction normal to the smectic layer accorded with the rubbing direction.

Next, the composition (II) was filled in a cell having a cell gap of 2 µm and the temperature was similarly lowered. The resulting aligning state of $S_c$* phase at 25°C is shown in Fig. 20A. This liquid crystal cell was placed between two polarizers arranged in a crossed Nicols state and an alternating voltage of a rectangular wave of peak to peak 40 V was impressed thereto at 25°C. As a result, a clear light switching was observed in a contrast ratio of 25 or more, and the response time was 0.6 m sec.

Among the components of the composition (II), compound 18 is a nematic liquid crystal compound and was added for broadening the $S_c$* phase temperature range of the composition. Among the other five components having $S_c$* phase, only compound 7 is different in the sign of spontaneous polarization and in the helical twist sense of $S_c$* phase from other $S_c$* phase liquid crystals, and compound 17 is a component having a large spontaneous polarization value. The remainder three components having $S_c$* phase were added in order to increase the number of components to thereby lower the melting point of the composition. Compound 7 functions so as to reduce the spontaneous polarization value of the composition although the reduction quantity is small. However, compound 7 has a short helical pitch of $S_c$* phase and has a function of extending the helical pitch of the composition by adding it in a small quantity. As to the helical twist sense in Ch phase, those of compound 7 and compound 17 are of right handed, and by

blending these components with the other three components of left handed, the helical pitch of Ch phase of the composition was sufficiently extended.

Comparative example

A ferroelectric liquid crystal composition (III) consisting of six components was prepared in the same manner as in Example 2 except that compound 17 of Example 2 was replaced by the enantiomer of the compound 17 expressed by the formula

(R) 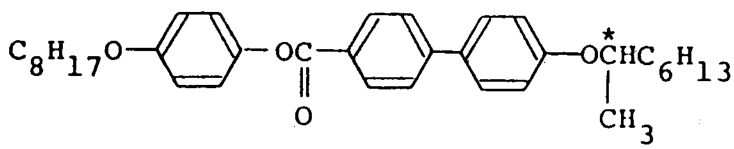

(Compound 19)

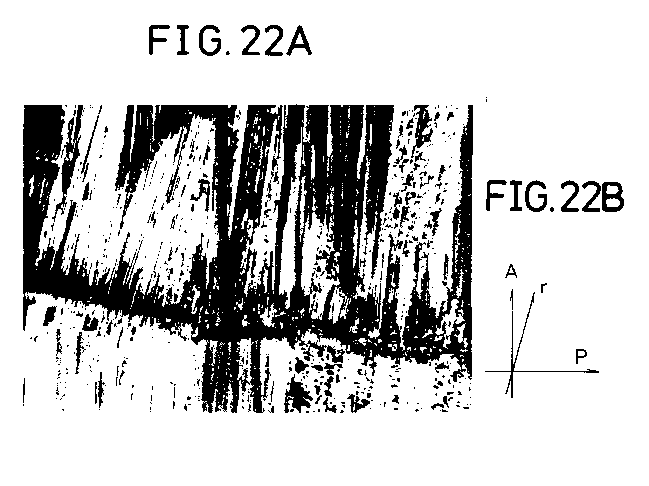

The phase transition points of the composition (III) were naturally equal to those of the composition (II). But the helical pitch of Ch phase of the composition (III) was 1 µm or less. The composition (III) was sealed in a cell of a cell gap of 10 µm same as used in Example 2 and led to Ch phase, but no N phase state was formed. This is because right-handed and left-handed helical twisting power of Ch phase become unbalanced. The temperature of this liquid crystal cell was slowly lowered at a rate of 1 ° C/min. The aligning state of $S_c$* phase thus obtained at 25 ° C is shown in Fig. 21A. Further, the composition (III) was sealed in a cell of a cell gap of 2 µm same as used in Example 2 and carefully led to $S_c$* phase (25 ° C) at a temperature-descending rate of 1 ° C/min. The resulting aligning state is shown in Fig. 22A. With both the liquid cells, alignment was very carefully tried, but the aligning state was inferior and accordance of the direction normal to the smectic layer with the rubbing direction was not observed. From these results it was seen that the longer the helical pitch of Ch phase of the composition, the better the aligning state of $S_c$* phase.

## Claims

1. A liquid crystal display element using a ferroelectric liquid crystal material which has, with decreasing temperature, a sequence of an isotropic phase, a cholesteric phase, a smectic A phase and a ferroelectric chiral smectic C phase, starting from said isotropic phase, the respective helical pitches in said cholesteric phase and smectic C phase being 2 µm or more.

2. A process for producing a liquid crystal display element which comprises carrying out alignment of a chiral smectic C phase by the use of a ferroelectric liquid crystal material which has, with decreasing temperature, a sequence of an isotropic phase, a cholesteric phase, a smectic A phase and a ferroelectric chiral smectic C phase, starting from said isotropic phase, the respective helical pitches in said cholesteric phase and smectic C phase being 2 µm or more.

## Revendications

1. Un élément d'affichage à cristaux liquides utilisant une substance cristal liquide ferroélectrique qui a, avec un abaissement de la température, une séquence d'une phase isotrope, une phase cholestérique, une phase smectique A et une phase smectique C ferroélectrique chirale, partant de ladite phase isotrope, les pas de spires respectifs dans ladite phase cholestérique et dans ladite phase smectique C étant au moins de 2 µm.

2. Un procédé de production d'un élément d'affichage à cristaux liquides qui comprend la réalisation de l'alignement d'une phase smectique C chirale par l'utilisation d'une substance cristal liquide ferroélectrique qui a, avec un abaissement de la température, une séquence d'une phase isotrope, une phase cholestérique, une phase smectique A et une phase smectique C ferroélectrique chirale, partant de ladite phase isotrope, les pas de spires respectifs dans ladite phase cholestérique et dans ladite phase smectique C étant au moins de 2 µm.

**Patentansprüche**

1. Flüssigkristallanzeigeelement, welches ein ferroelektrisches flüssig-kristallines Material benutzt, das mit abnehmender Temperatur die Abfolge einer isotropen Phase, einer cholesterischen Phase, einer smektischen A-Phase und einer ferroelektrischen, chiralen smektischen C-Phase durchläuft, beginnend mit der isotropen Phase, wobei die jeweiligen helikalen Ganghöhen in der cholesterischen Phase und der smektischen C-Phase 2 $\mu$m oder mehr betragen.

2. Verfahren zur Herstellung eines Flüssigkristallanzeigeelements, bei dem die Orientierung einer chiralen smektischen C-Phase durch die Verwendung eines ferroelektrischen, flüssig-kristallinen Materials ausgebildet wird, das mit abnehmender Temperatur die Abfolge einer isotropen Phase, einer cholesterischen Phase, einer smektischen A-Phase und einer ferroelektrischen, chiralen smektischen C-Phase durchläuft, beginnend mit der isotropen Phase, wobei die jeweiligen helikalen Ganghöhen in der cholesterischen Phase und der smektischen C-Phase 2 $\mu$m oder mehr betragen.

FIG. 1

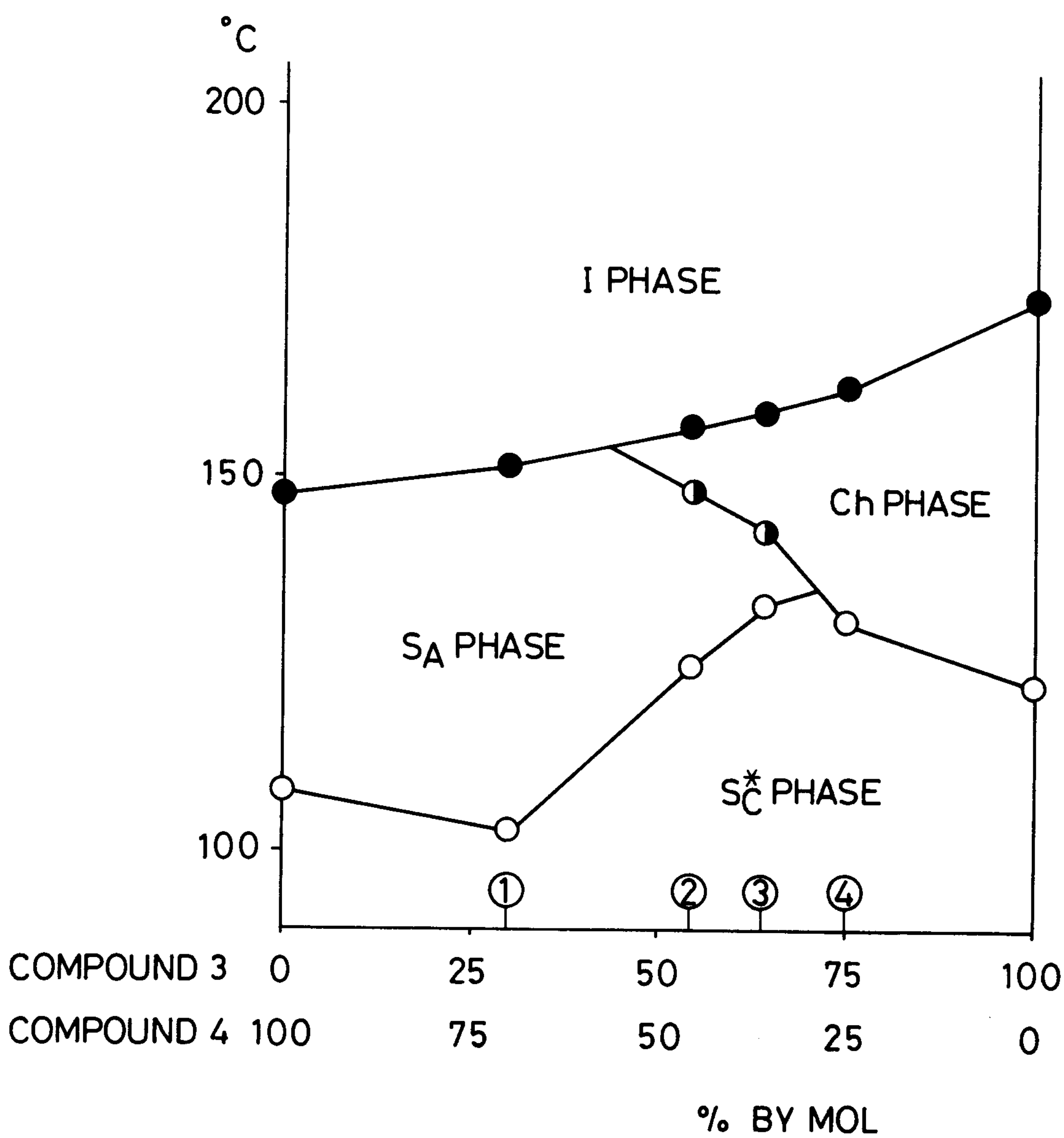
°C
200
150
100
I PHASE
Ch PHASE
$S_A$ PHASE
$S_C^*$ PHASE
①
②
③
④
COMPOUND 3 0 25 50 75 100
COMPOUND 4 100 75 50 25 0
% BY MOL

FIG. 2A

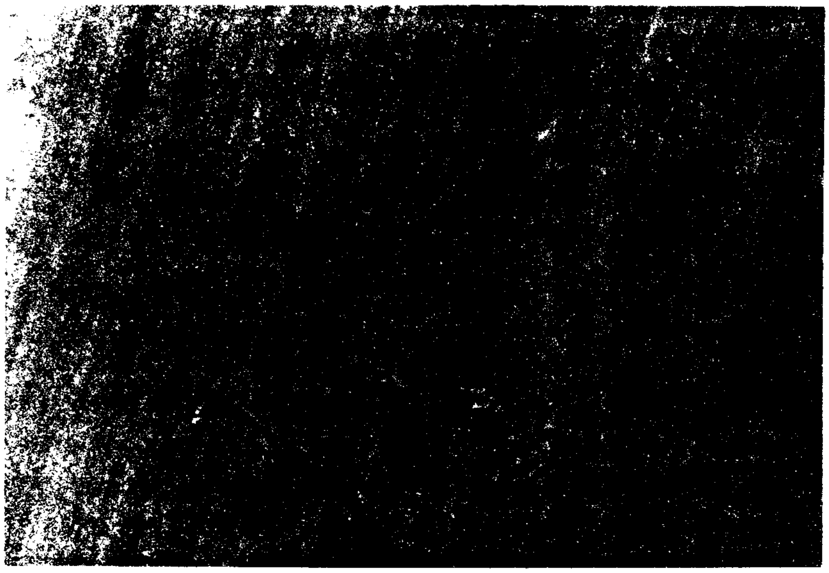

FIG. 2B

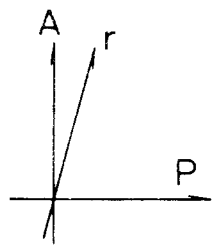


FIG. 3A

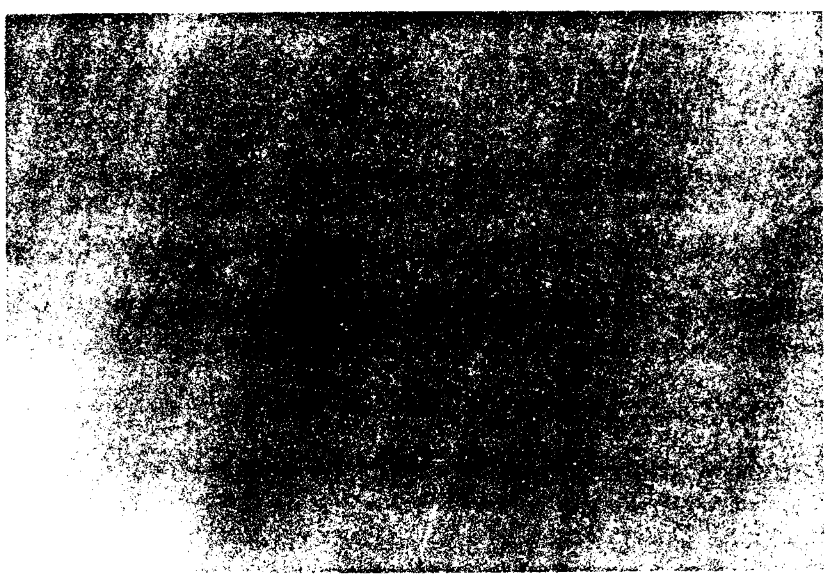

FIG. 3B

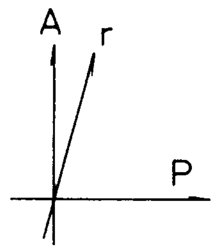

FIG. 4A

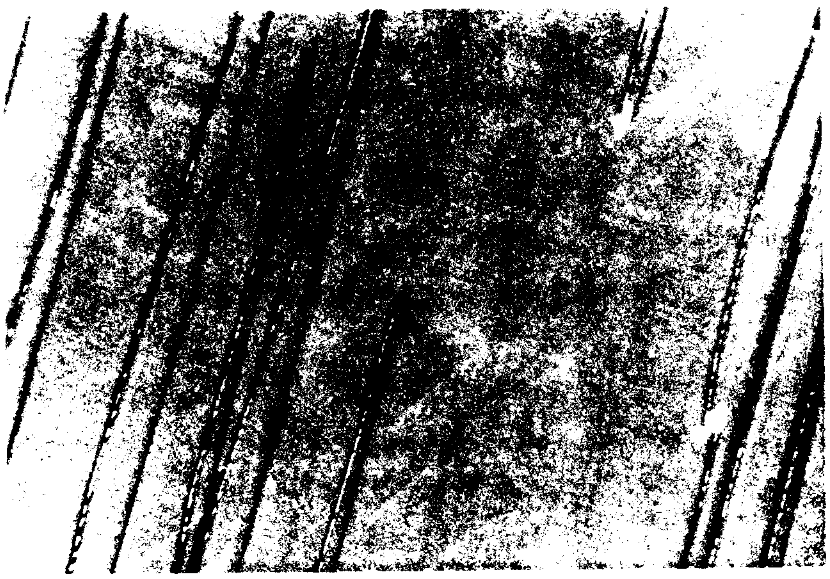

FIG. 4B

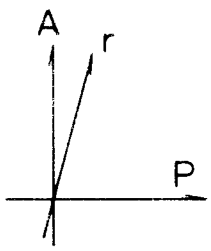


FIG. 5A

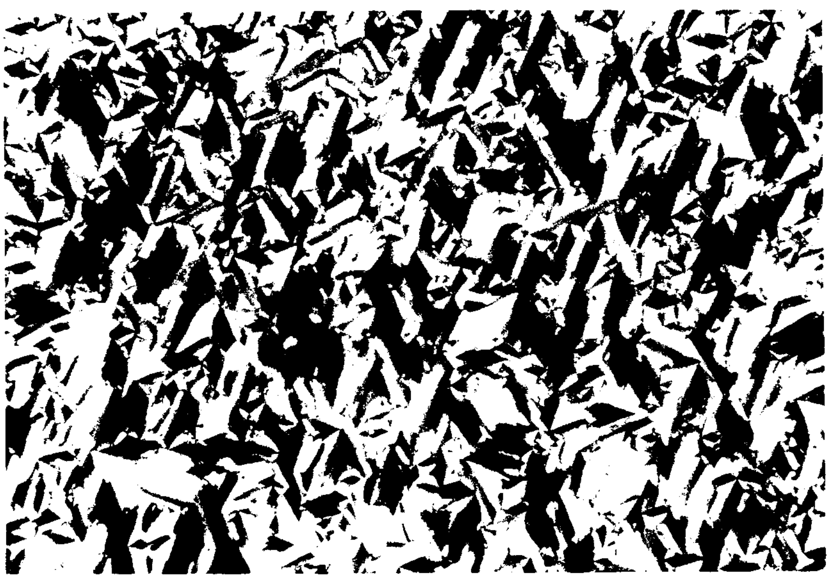

FIG. 5B

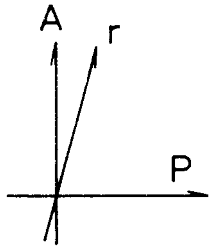

FIG.6A

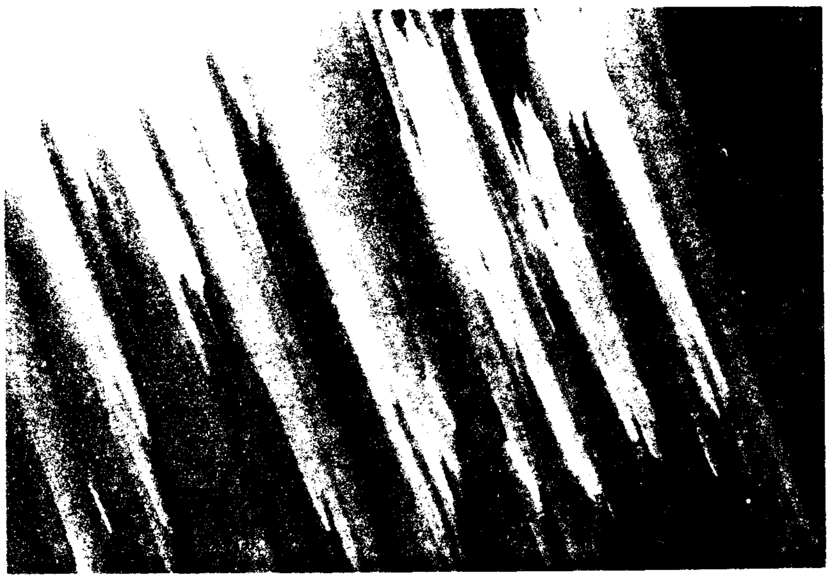

FIG.6B

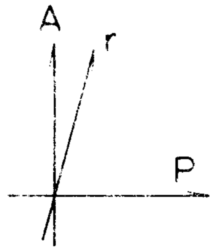


FIG.7A

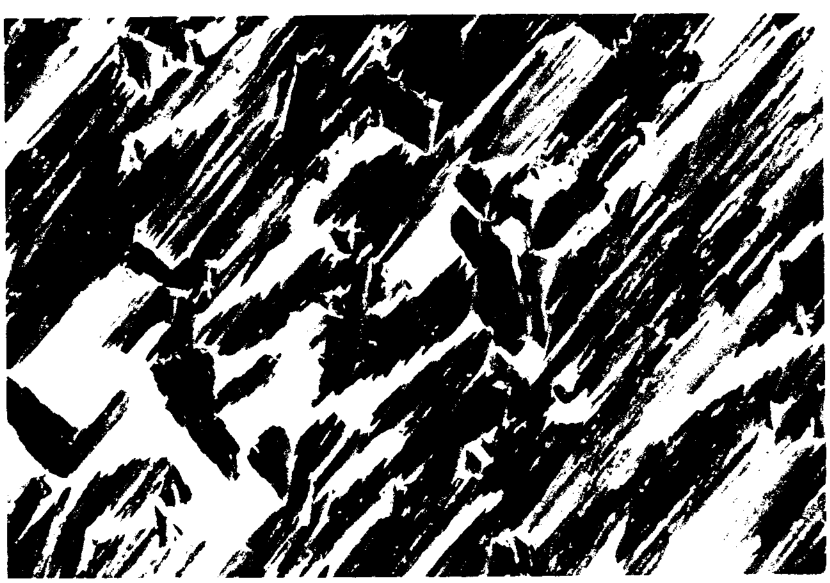

FIG.7B

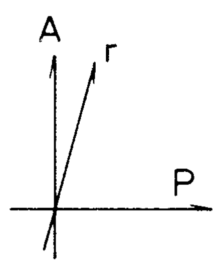

FIG. 8A

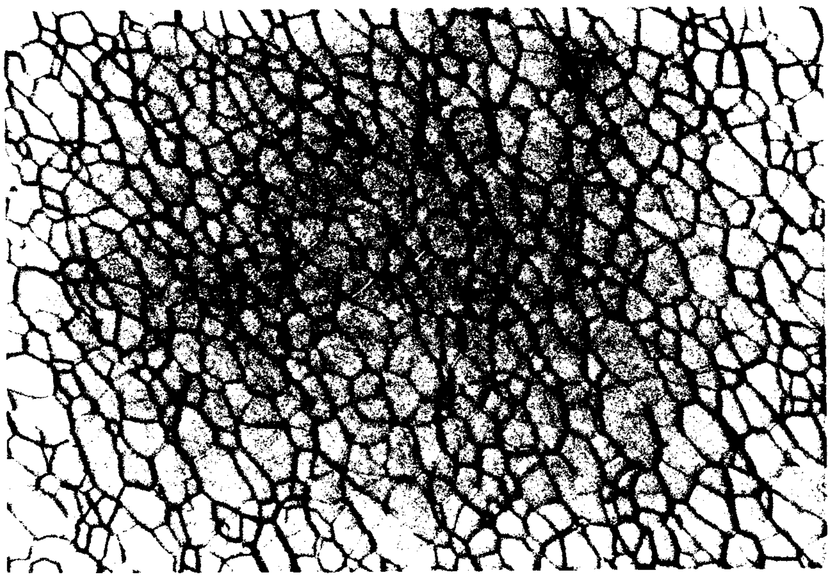

FIG. 8B

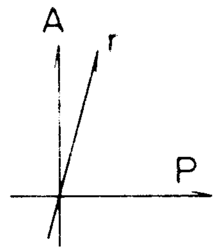


FIG. 9A

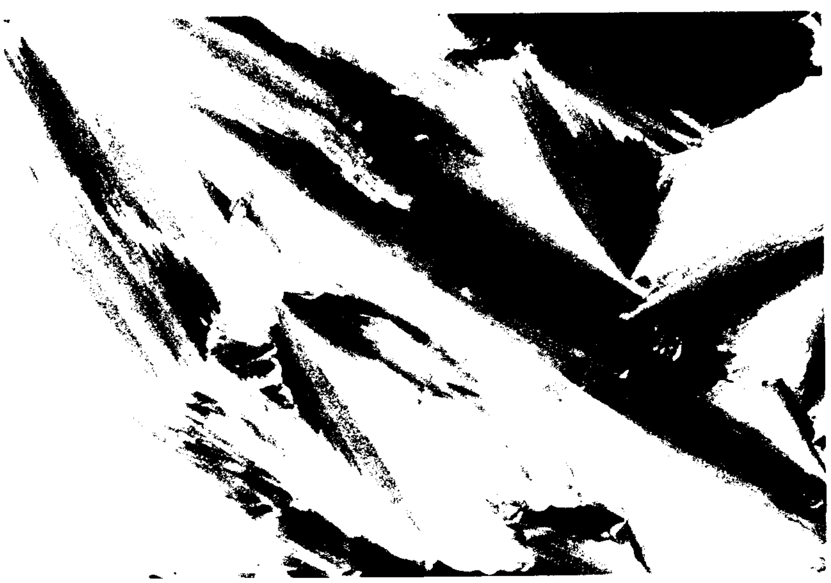

FIG. 9B

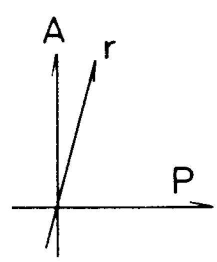

FIG.10A

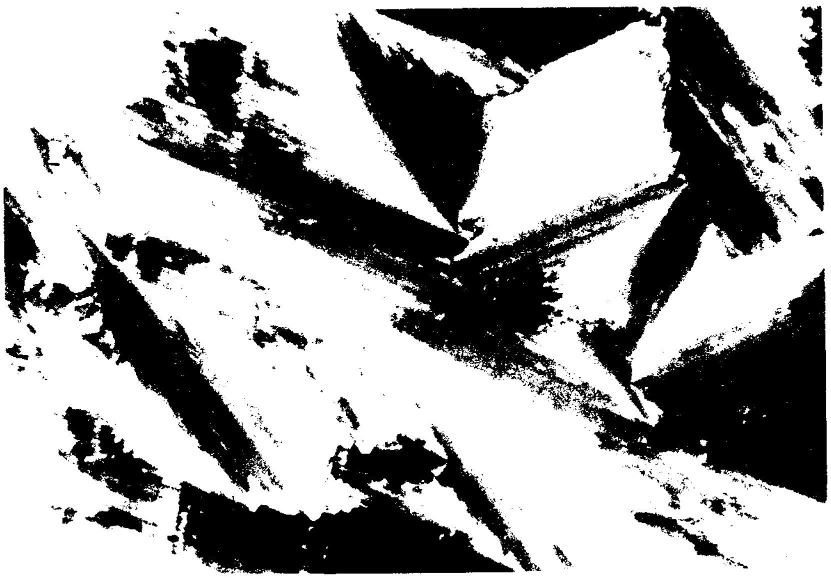

FIG.10B

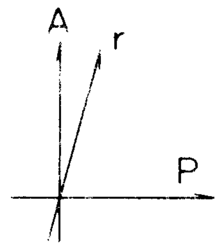


FIG.11

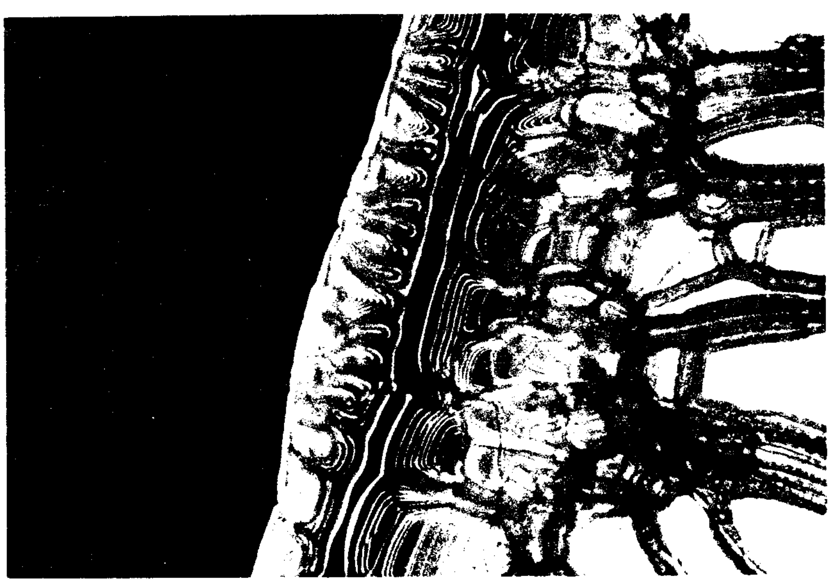

FIG.12

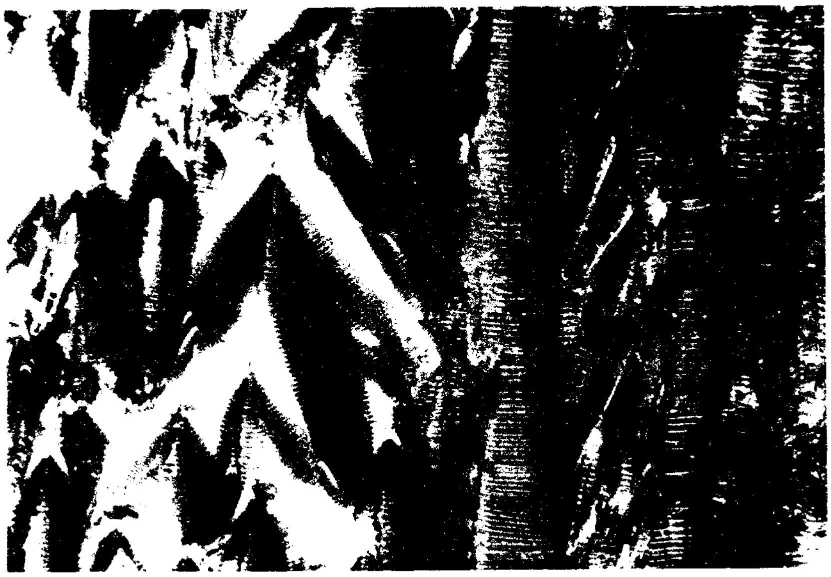

FIG.13

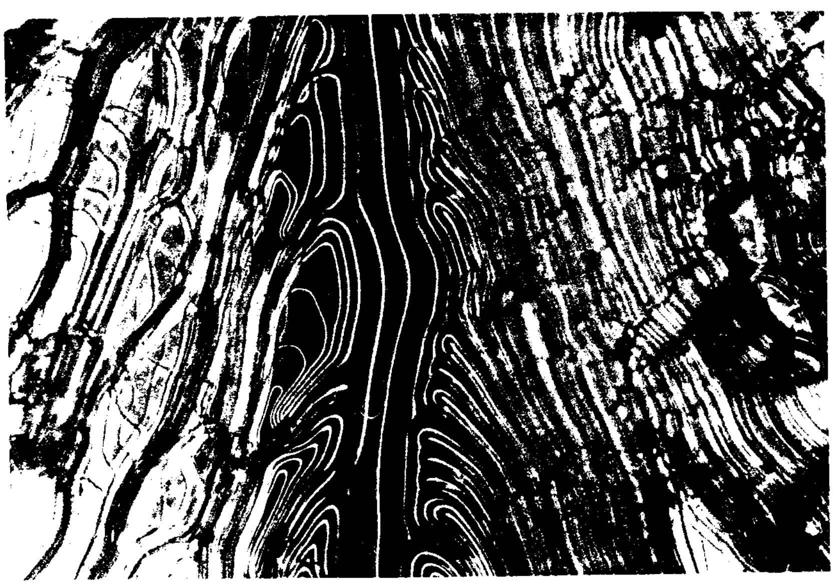

FIG.14

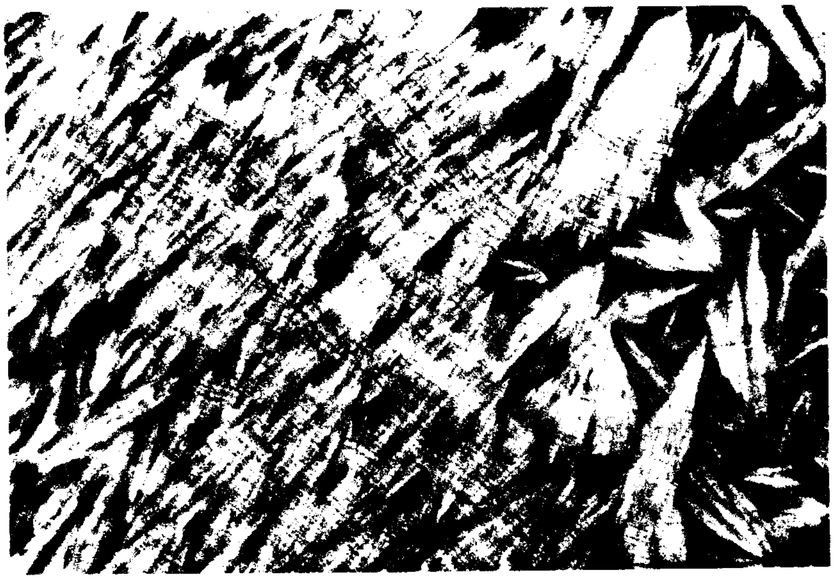

FIG.15A

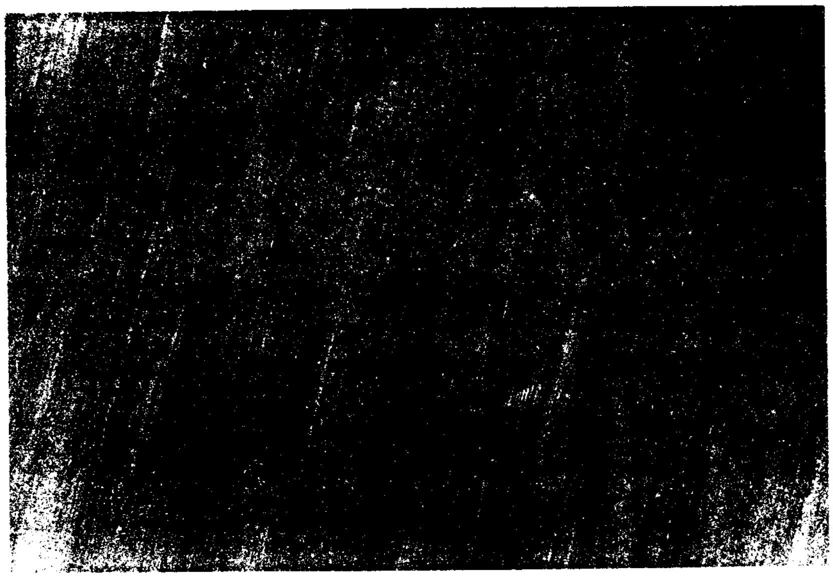

FIG.15B

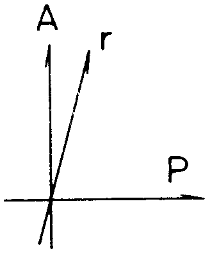

FIG.16A

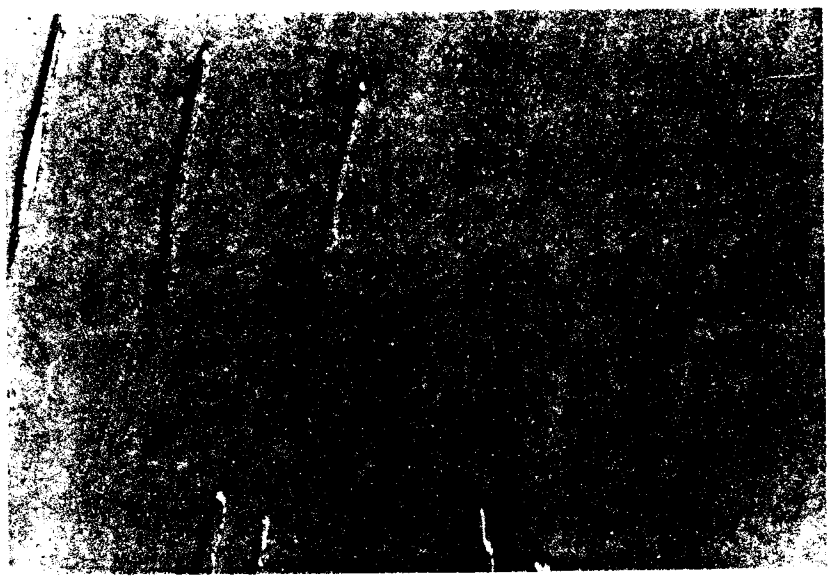

FIG.16B

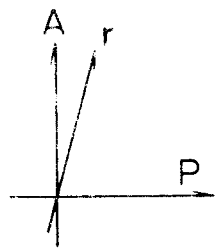


FIG.17A

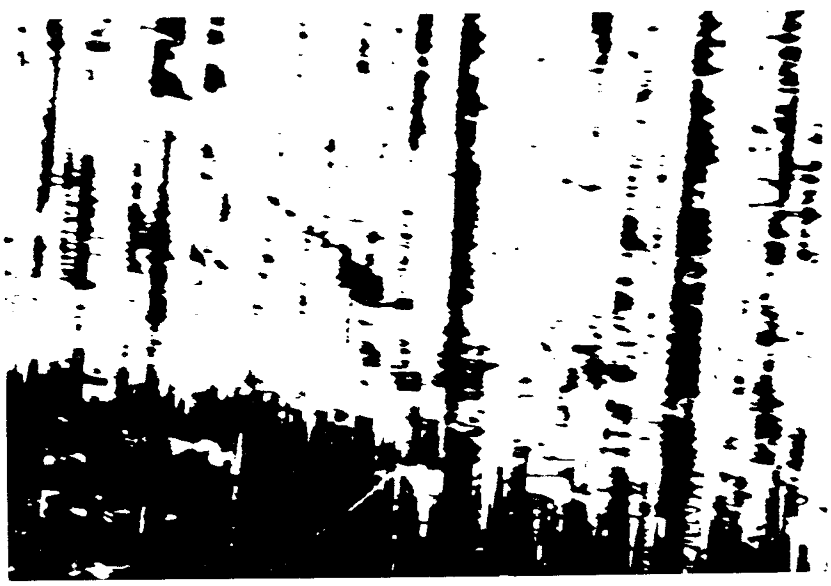

FIG.17B

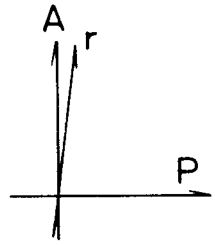

FIG.18A

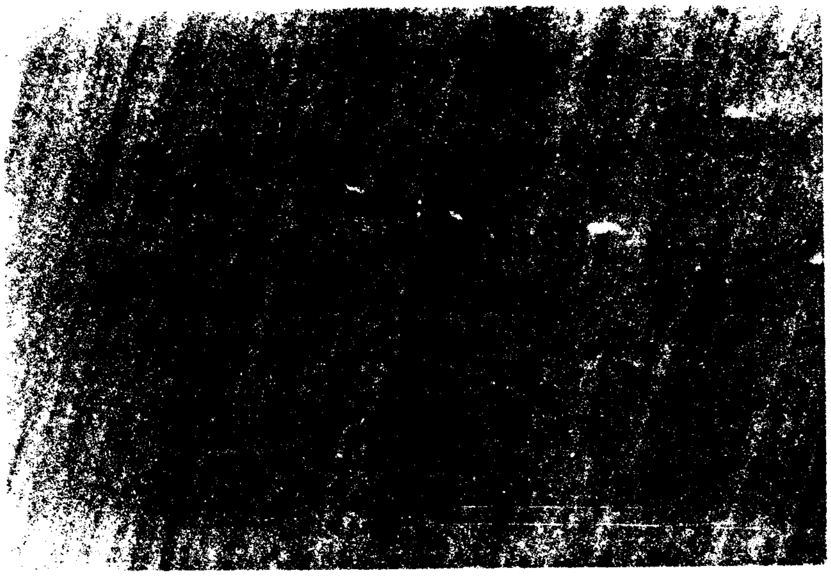

FIG.18B

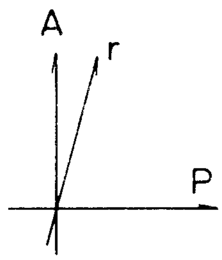


FIG.19A

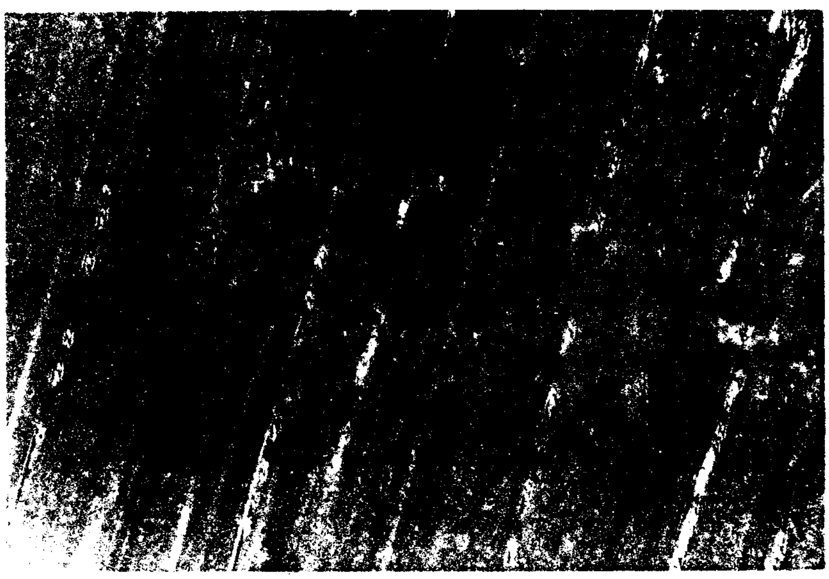

FIG.19B

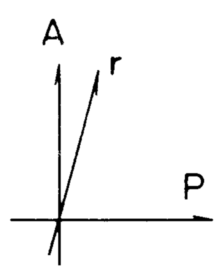

FIG. 20A

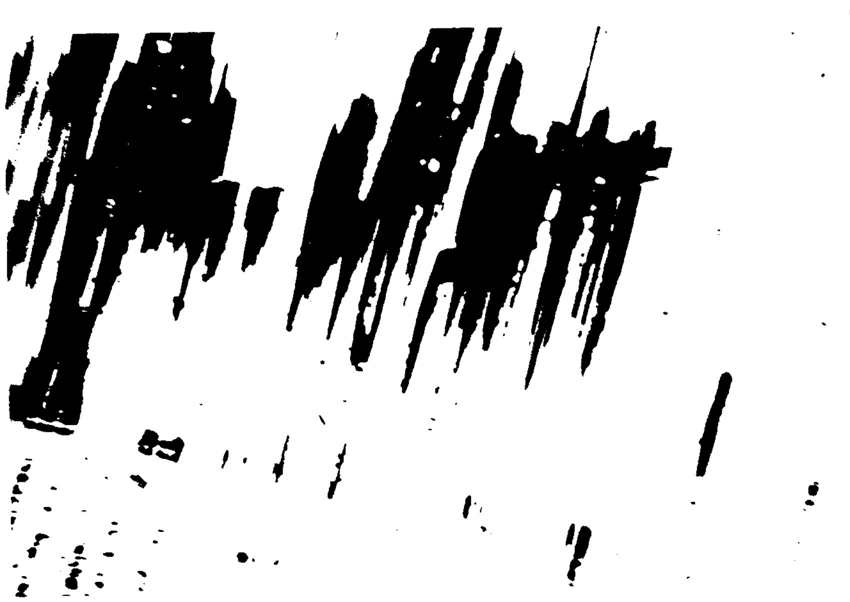

FIG. 20B

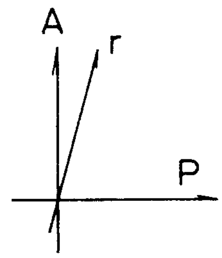


FIG. 21A

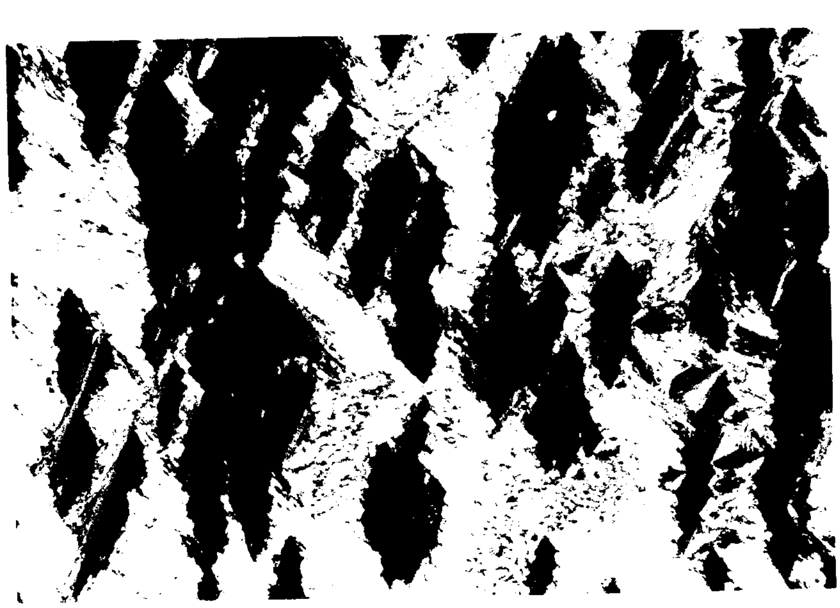

FIG. 21B

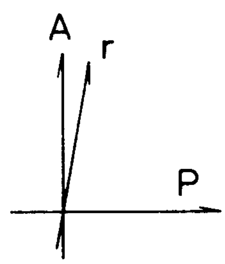

FIG. 22A

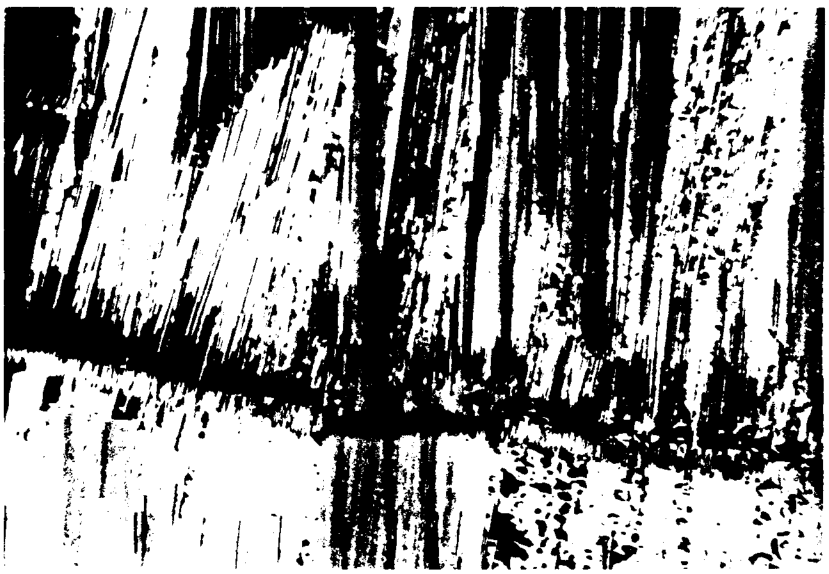

FIG. 22B